# EUROPEAN PATENT APPLICATION

(11) **EP 2 333 251 A2**
(43) Date of publication of application: **15.06.2011**
(21) Application number: 10252087.1
(22) Date of filing: 09.12.2010
(51) Int. Cl.: F01D 25/24

(54) **Fan containment case**

(30) Priority: 11.12.2009 US 636388
(71) Applicant: United Technologies Corporation, Hartford, CT 06101 (US)
(72) Inventor: Costa, Mark W., Storrs, CT 06268 (US); Lussier, Darin S., Berlin, CT 06037 (US)
(74) Representative: Leckey, David Herbert

(57) **Abstract**

A fan section (16) of a gas turbine engine includes a fan assembly (28), a fan containment case (30), and a plurality of structural exit guide vanes (34). The fan assembly (28) includes a fan rotor hub (36) centered on and rotatable about the engine centerline (24), and a plurality of fan blades (38) that are attached to and extend radially out from the fan rotor hub (36). The fan containment case (30) is disposed radially outside of and circumferentially around the fan assembly (25). The fan containment case (30) includes a shell (31) and an integral flange ring (50) that extends around the circumference of the shell (31), a circumferentially extending blade outer air seal (32) disposed between the fan blades (38) and the shell (31). The structural exit guide vanes (34) are mechanically attached to the fan containment case (30) at a position aligned with the integral flange ring (50).

## Description

### BACKGROUND OF THE INVENTION

### 1. Technical Field

The present invention relates to fan casings for aircraft gas turbine engines.

### 2. Background Information

Modem aircraft are often powered by a propulsion system that includes a gas turbine engine housed within an aerodynamically streamlined nacelle. The major engine components include (i) a fan section including a rotatable hub, an array of fan blades projecting radially from the hub and a fan support case encircling the blade array, (ii) a compressor section, (iii) a combustor section and (iv) a turbine section. A typical fan support case includes a fan containment casing and a fan exit casing mechanically connected together via a plurality of fasteners. The fan containment casing provides structure for mounting elements including a blade outer air seal, acoustic attenuation panels, and a containment wrap. The fan exit casing provides structure for mounting elements including frame rail mounting elements, a plurality of non-structural exit guide vanes and a plurality of structural struts extending from an engine core.

The aforesaid seals, panels, guide vanes and struts add weight to the engine and do not directly provide thrust, consequently negatively affecting the thrust to weight ratio of the engine. Furthermore, mechanical failure of the fasteners connecting the containment casing and the exit casing of the fan support case can occur as a result of buckling caused by a blade out condition or foreign object ingestion. Therefore, there is a need in the art to provide a fan support case which favorably affects the thrust to weight ratio of the engine and decreases the likelihood of failure of the fan support case.

### SUMMARY OF THE INVENTION

According to an aspect of the present invention, a fan section of a gas turbine engine having an axially extending centerline is provided. The fan section includes a fan assembly, a fan containment case, and a plurality of structural exit guide vanes. The fan assembly includes a fan rotor hub centered on and rotatable about the centerline, and a plurality of fan blades that are attached to and extend radially out from the fan rotor hub. The fan containment case is disposed radially outside of and circumferentially around the fan assembly. The fan containment case includes a shell and an integral flange ring that extends around the circumference of the shell. The structural exit guide vanes are mechanically attached to the fan containment case at a position aligned with the integral flange ring.

According to another aspect of the present invention, a gas turbine engine having an axially extending centerline is provided. The gas turbine engine includes a fan section, a compressor section, a combustor section, and a turbine section. The fan section includes a fan rotor hub centered on and rotatable about the centerline. A plurality of fan blades is attached to and extends radially out from the fan rotor hub. The fan containment case is disposed radially outside of and circumferentially around the fan rotor hub and the attached fan blades. The fan containment case includes a shell and a flange ring integral with one another. The flange ring extends around the circumference of the shell. A plurality of structural exit guide vanes are mechanically attached to the fan containment case at a position aligned with the flange ring.

According to another aspect of the present invention, a fan containment case for a fan section of a gas turbine engine is provided. The fan section includes a rotor hub and attached fan blades rotatable about a centerline, and a plurality of structural guide vanes disposed aft of the rotor hub. The fan containment case includes a shell, a flange ring, and a plurality of guide vane attachments. The shell is shaped to be disposed radially outside of and circumferentially around the fan assembly. The flange ring is integrally formed with the shell, and extends around the circumference of the shell. The plurality of guide vane attachments are distributed around the shell and aligned with the flange ring.

The foregoing features and advantages and the operation of the invention will become more apparent in light of the following description of the best mode for carrying out the invention and the accompanying drawings.

### BRIEF DESCRIPTION OF THE DRAWINGS

FIG. 1 is a diagrammatic cross-sectional illustration of one embodiment of a gas turbine engine having a fan section and an engine core.
FIG. 2 is a partial diagrammatic cross-sectional illustration of one embodiment of a fan containment case.
FIG. 3 diagrammatically illustrates a side view of one embodiment of a fan containment case.
FIG. 4 is a perspective, partial detail diagrammatic illustration of one embodiment of the fan containment case.

### DETAILED DESCRIPTION OF THE INVENTION

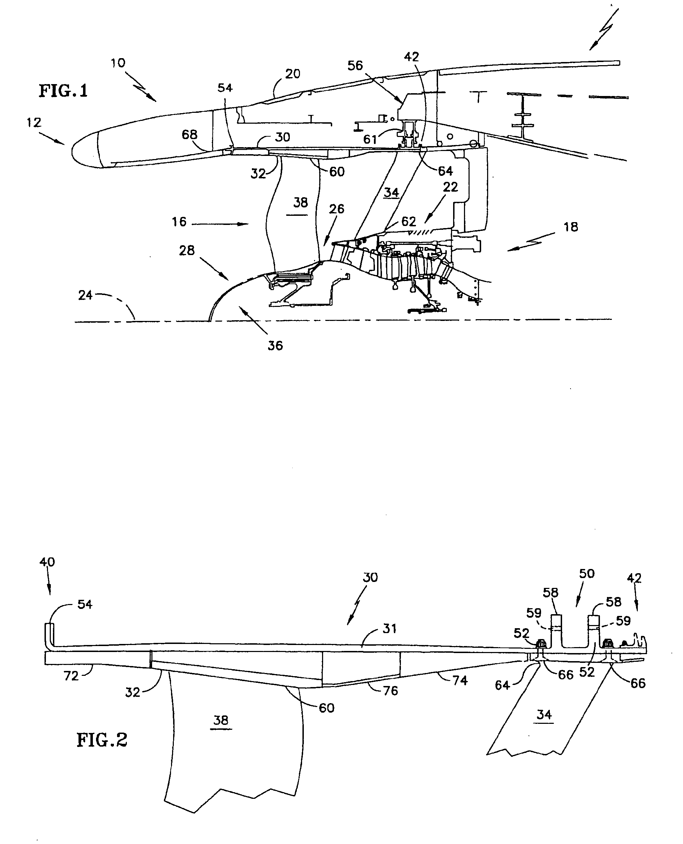

FIG. 1 is a diagrammatic illustration of one embodiment of a gas turbine engine 10 (hereinafter the "engine") such as, but not limited to, a geared turbofan engine. The engine 10 includes a fan section 16, a compressor section 22, a combustor section (not shown), and a turbine section (not shown) disposed between a forward end and an aft end. The fan, compressor, combustor and turbine sections can be referred to as the engine core 18. In aircraft applications, the engine 10 is disposed within a nacelle 20 that substantially surrounds the engine 10. The rotors within the fan, compressor, and turbine sections rotate about an axial centerline 24. Air entering the forward end of the nacelle travels along a flow path 26 through the engine 10 toward the aft end of the engine. Compressor sections, combustor sections, turbine sections, and nacelles are well known in the art, and the present invention is not limited to any particular type or configuration thereof.

The fan section 16 includes a fan assembly 28, a fan containment case 30, a blade outer air seal 32 (hereinafter the "BOAS") and a plurality of structural exit guide vanes 34 (hereinafter the "guide vanes").

In the embodiment shown in FIG. 1, the fan assembly 28 includes a fan rotor hub 36 and a plurality of fan blades 38. The fan rotor hub 36 is centered on and rotatable about the centerline 24. The fan blades 38 are connected to and radially extend out from the fan rotor hub 36.

FIG. 2 is a partial sectioned diagrammatic view of an embodiment of a containment case 30. The containment case 30 has a flange ring 50 that is integral with an annular shell 31. The term "integral" is used to indicate that the flange ring 50 and the containment case 30 are formed as a single unit. The case 30 further includes guide vane attachments 52 and a forward mount 54. The shell 31 encircles the centerline 24 and extends axially (i.e., substantially parallel to the centerline 24) between a forward end 40 and an aft end 42. In some embodiments, the case 30 is a unitary, integral hoop-type structure that axially extends between the forward and the aft ends 40, 42. The flange ring 50 provides structural rigidity to the containment case 30 (e.g., helps maintain circularity during operation) and acts as a load bearing member between the engine core 18 and one or more engine frame rails 56 (see FIG. 1). The flange ring 50 includes one or more flange members 58 that extend radially out from and circumferentially around the containment case 30. In the embodiment in FIG. 2, the flange ring 50 includes a pair of flange members 58 configured in a "U" shaped cross-sectional geometry that encircles the containment case 30. In this example, each flange member 58 has one or more axially extending apertures 59 (e.g., clevis / bolt holes) for connecting the flange ring 50 to one or more mounting elements 61 (see FIG. 1). The containment case 30 can be constructed (e.g., by molding and/or machining) from materials including, but not limited to, aluminum, steel, titanium and/or composites.

The guide vane attachments 52 attach the axially aligned flange ring 50 and guide vanes 34, and thereby provide a load path therebetween. For example, in the embodiment in FIG. 2, the guide vane attachments 52 include mechanical fasteners 66 (e.g., bolts) that are disposed in radially extending apertures disposed circumferentially in the containment case 30 adjacent to and on both sides of the flange ring 50.

The forward mount 54 is disposed at the forward end 40 of the containment case 30 and is adapted to connect the containment case 30 to the nacelle 20. In the embodiment shown in FIG. 2, for example, the forward mount 54 is a flange that extends radially out from and circumferentially around (e.g., encircles) the containment case 30. The present invention is not limited to the embodiment shown in FIG. 2.

The BOAS 32 (e.g., an abradable BOAS) circumferentially extends about (i.e., encircles) the centerline 24 and is adapted to form a seal between the fan blades 38 and the fan containment case 30. Upon first use of the BOAS, the fan blade tips 60 will typically thermally or centrifugally grow and engage the abradable BOAS, creating a trench within the BOAS 32. During operation thereafter, the fan blade tips 60 will extend into the trench during segments of engine operation and thereby provide a seal that decreases air leakage around the fan blade tips 60.

The external surface of each guide vane 34 is typically shaped as an airfoil that extends from an inner radial end 62 to an outer radial end 64. The airfoil shape creates less pressure losses within the flow path. The guide vanes 34 are adapted to be load bearing members that can transmit force loads between the engine core 18 and the flange ring 50 of the containment case 30.

Referring to FIG. 1, the forward mount 54 of the containment case 30 is connected to a radial interior 68 of the nacelle 20, for example, via a plurality of fasteners (not shown). The flange ring 50 of the containment case 30 is structurally tied / connected to the engine frame rails 56, for example, via the mounting elements 61. For example, in the embodiment in FIG. 1, the mounting elements 61 are connected to the flange ring 50 by inserting a clevis pin (not shown) through the mounting elements 61 and into the clevis holes 59 in the flange ring 50.

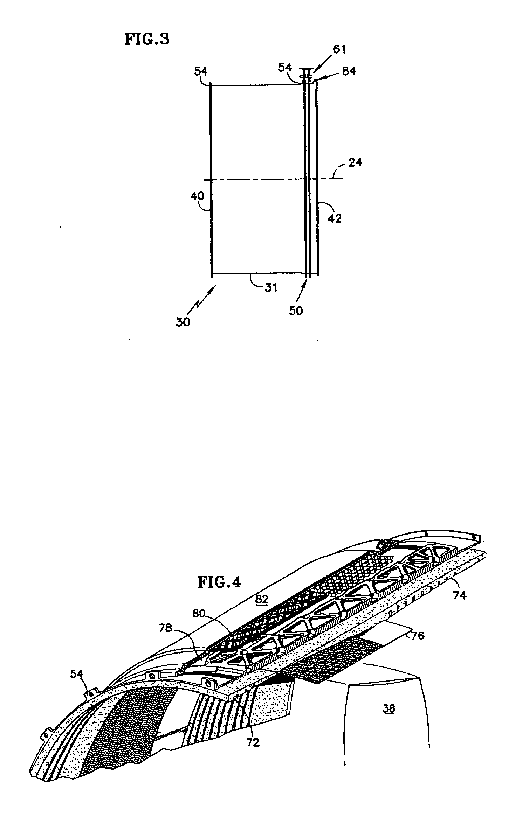

Referring to FIG. 4, in some embodiments, the fan casing can further include one or more noise attenuation panels (e.g., forward and aft noise attenuation panels 72, 74), an ice shield 76, a thin aluminum face sheet 78, a penetrable containment covering 80 (hereinafter the "penetrable covering") and a penetration resistant containment covering 82 (hereinafter the "penetration resistant covering"). The forward and the aft noise attenuation panels 72, 74 are secured to a radially inner surface of the containment case 30 adjacent to and on either side of the BOAS 32. The ice shield 76, which is disposed axially between the BOAS 32 and the aft noise attenuation panel 74, is operable to protect the aft noise attenuation panel 74 from impact damage due to any accumulated ice cast off by the fan blades 38 during operation.

In those embodiments that include a face sheet 78, a penetrable covering 80, and a penetration resistant covering 82, the sheet 78 is adhesively bonded to ribs on the outside of the containment case 30. The penetrable covering 80 is wrapped around and is contiguous with the face sheet 78. The penetration resistant covering 82 is wrapped around and is contiguous with the penetrable covering 80. The penetrable covering 80, face sheet 78, and penetration resistant covering 82 circumscribe an impact zone of the containment case 30. Acceptable examples of the penetrable covering 80 and the penetration resistant covering 82 are disclosed in U.S. Patent No. 6,059,524 which is hereby incorporated by reference in its entirety. The present invention is not limited to these coverings, however.

During operation, the fan section 16 and/or the engine core 18 can generate radial, axial and/or torsional loads (e.g., due to vibrations, thrust, centripetal forces, etc.). A portion of these loads is radially transferred through the structural guide vanes 34 to the flange ring 50 of the containment case 30. The loads transfer from the flange ring 50 to a frame rail 56; e.g., via the mounting elements 61.

In the event of an impact or failure mode (e.g., a blade out condition or foreign object - bird - strike), the fan containment case can be subject to a transient loading that can travel axially within the fan section; i.e., a transient loading that can be described as a wave traveling axially forward to aft through the length of the fan containment case. The structure of the present invention fan containment case provides an uninterrupted axial path for that wave and an integral flange ring 50 to support the case 30. In an embodiment wherein the fan containment case includes axial sections connected to one another at circumferentially extending seams, the load wave could create an undesirable buckling mode at the circumferentially extending seam. The absence of such seams with the present invention fan containment case avoids the possibility of buckling.

While various embodiments of the present invention have been disclosed, it will be apparent to those of ordinary skill in the art that many more embodiments and implementations are possible within the scope of the invention. Accordingly, the present invention is not to be restricted except in light of the attached claims and their equivalents.

## Claims

1. A fan section (16) of a gas turbine engine having an axially extending centerline (24), comprising:
a fan assembly (28) having a fan rotor hub (36) centered on and rotatable about the centerline (24), and a plurality of fan blades (38) attached to and extending radially out from the fan rotor hub (36);
a fan containment case (30) disposed radially outside of and circumferentially around the fan assembly (28), wherein the fan containment case (30) includes a shell (31) and a flange ring (50) integral with one another, which flange ring (50) extends around the circumference of the case (30); and
a plurality of structural exit guide vanes (34) mechanically attached to the fan containment case (30) at a position aligned with the flange ring (50).

2. The fan section of claim 1, further comprising a circumferentially extending blade outer air seal (32) disposed between the fan blades (38) and the fan containment case (30).

3. The fan section of claim 1 or 2, wherein the fan containment case (30) unitarily extends from a front end (40) to an aft end (42).

4. The fan section of any preceding claim, wherein the fan containment case (30) includes a plurality of circumferential sections.

5. The fan section of any preceding claim, wherein the flange ring (50) has a U-shaped cross-sectional geometry.

6. The fan section of any preceding claim, wherein the structural exit guide vanes (34) are bolted to the fan containment case (30) at the position aligned with the flange ring (50).

7. A gas turbine engine (10) having an axially extending centerline, comprising:
a fan section (16) that includes a fan rotor hub (36) centered on and rotatable about the centerline, a plurality of fan blades (38) attached to and extending radially out from the fan rotor hub (36), a fan containment case (30) disposed radially outside of and circumferentially around the fan rotor hub (36) and the attached fan blades (38), wherein the fan containment case (30) includes a shell (31) and a flange ring (50) integral with one another, which flange ring (50) extends around the circumference of the shell (31), a circumferentially extending blade outer air seal (32) disposed between the fan blades (38) and the fan containment case (30), and a plurality of structural exit guide vanes (34) mechanically attached to the fan containment case (30) at a position aligned with the flange ring (50);
a compressor section (16);
a combustor section; and
a turbine section.

8. The gas turbine engine of claim 7, wherein the fan containment case (30) unitarily extends from a front end (40) to an aft end (42).

9. The gas turbine engine of claim 7 or 8, wherein the fan containment case (30) includes a plurality of circumferential sections.

10. The gas turbine engine of claim 7, 8 or 9, wherein the flange ring (50) has a U-shaped cross-sectional geometry.

11. The gas turbine engine of any of claims 7 to 10, wherein the structural exit guide vanes (34) are bolted to the fan containment case (30) at the position aligned with the flange ring (50).

12. A fan containment case (30) for a fan section (16) of a gas turbine engine, which fan section includes a rotor hub and attached fan blades rotatable about a centerline, and a plurality of structural guide vanes disposed aft of the rotor hub, the case comprising:
a shell (31) shaped to be disposed radially outside of and circumferentially around the fan assembly (16);
a flange ring (50) integrally formed with the shell (31), which ring (50) extends around the circumference of the shell (31); and
a plurality of guide vane attachments (52) distributed around the shell (31) and aligned with the flange ring (50).
